# EUROPEAN PATENT APPLICATION

(11) **EP 3 779 285 A1**
(43) Date of publication of application: **17.02.2021**
(21) Application number: 18914406.6
(22) Date of filing: 12.04.2018
(51) Int. Cl.: F24D 3/10

(54) **HEATING SYSTEM**

(71) Applicant: Mitsubishi Electric Corporation, Tokyo 100-8310 (JP)
(72) Inventor: MATSUMURA, Yasunari, Tokyo 100-8310 (JP); SHIBAZAKI, Naoki, Tokyo 100-8310 (JP); MATSUO, Kensuke, Tokyo 100-8310 (JP); NAITO, Shuhei, Tokyo 100-8310 (JP)
(74) Representative: Witte, Weller & Partner Patentanwälte mbB
(86) International application number: PCT/JP2018/015371
(87) International publication number: WO 2019/198196

(57) **Abstract**

A heating system (1) includes a first switching valve (124) and a second switching valve (125). The first switching valve (124) is configured to be switchable between third-fifth communication that is a state where a third passage (127) communicates with a fifth passage (128), and fourth-fifth communication that is a state where a fourth passage (130) communicates with the fifth passage (128). The second switching valve (125) is configured to be switchable between sixth-seventh communication that is a state where a sixth passage (123) communicates with a seventh passage (131), sixth-eighth communication that is a state where the sixth passage (123) communicates with an eighth passage (134), seventh-eighth communication that is a state where the seventh passage (131) communicates with the eighth passage (134), and sixth-seventh-eighth communication that is a state where both the sixth passage (123) and the seventh passage (131) communicate with the eighth passage (134).

## Description

### Field

The present invention relates to a heating system.

### Background

There is known a heating system that carries out an indoor heating operation and a heat accumulating operation that stores heat in a tank, by using a high-temperature fluid generated in a heat pump or other heat source devices, for example.

PTL 1 discloses a hot water indoor heating and hot water supply system capable of carrying out an indoor heating operation and a heat accumulating operation by using a heat source, a storage tank, seven switching valves, and one pump.

### Citation List

### Patent Literature

[PTL 1] JP 2008-232462 A

### Summary

### Technical Problem

In the configuration of PTL 1, a large number of actuators are required, so that control of the switching valves is complicated, power consumption increases, production cost increases, and product weight increases.

The present invention is made to solve the problem as described above, and has an object to provide a heating system advantageous for simplifying device configuration. Solution to Problem

A heating system according to the present invention includes: a tank configured to store a fluid; a heat source having an inlet and an outlet, the heat source being configured to heat the fluid; a pump having an intake port and a discharge port, the pump being configured to circulate the fluid; a first passage connecting the discharge port of the pump and the inlet of the heat source; a second passage connecting a fluid outlet of an indoor heating device and the intake port of the pump; a first switching valve having a first port, a second port and a third port; a second switching valve having a fourth port, a fifth port and a sixth port; a third passage connecting a first branch portion formed in a midway of the first passage and the first port; a fourth passage connecting a second branch portion formed in a midway of the second passage and the second port; a fifth passage connecting a lower portion of the tank and the third port; a sixth passage connecting the outlet of the heat source and the fourth port; a seventh passage connecting an upper portion of the tank and the fifth port; an eighth passage connecting the sixth port and a fluid inlet of the indoor heating device; and control means for controlling actions of the heat source, the pump, the first switching valve, and the second switching valve. The first switching valve is configured to be switchable between third-fifth communication that is a state where the third passage communicates with the fifth passage, and fourth-fifth communication that is a state where the fourth passage communicates with the fifth passage. The second switching valve is configured to be switchable between sixth-seventh communication that is a state where the sixth passage communicates with the seventh passage, sixth-eighth communication that is a state where the sixth passage communicates with the eighth passage, seventh-eighth communication that is a state where the seventh passage communicates with the eighth passage, and sixth-seventh-eighth communication that is a state where both the sixth passage and the seventh passage communicate with the eighth passage.

### Advantageous Effects of Invention

According to the present invention, it becomes possible to provide the heating system advantageous for simplifying device configuration.

### Brief Description of Drawings

Fig. 1 is a diagram illustrating a heating system according to embodiment 1.
Fig. 2 is a diagram illustrating a flow of a fluid at a time of a heat source indoor heating operation of the heating system illustrated in Fig. 1.
Fig. 3 is a diagram illustrating a flow of the fluid at the time of a tank indoor heating operation of the heating system illustrated in Fig. 1.
Fig. 4 is a diagram illustrating a flow of the fluid at the time of a mixed indoor heating operation of the heating system illustrated in Fig. 1.
Fig. 5 is a diagram illustrating a flow of the fluid at the time of a heat accumulating operation of the heating system illustrated in Fig. 1.

### Description of Embodiment

Hereinafter, an embodiment will be described with reference to the drawings. Common or corresponding elements in the respective drawings are assigned with same reference signs, and redundant explanation is simplified or omitted.

### Embodiment 1

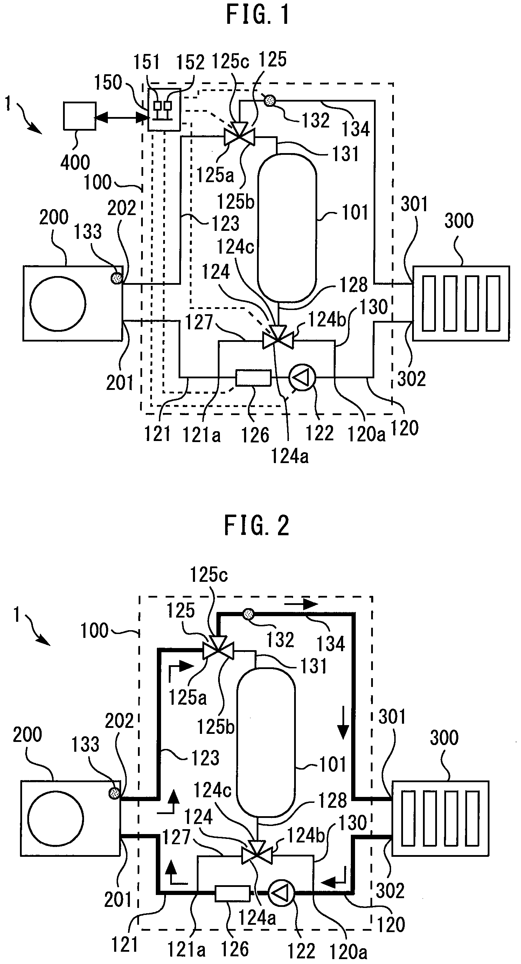

Fig. 1 is a diagram illustrating a heating system according to embodiment 1. As illustrated in Fig. 1, a heating system 1 includes a tank 101, a heat source 200, a pump 122, a first switching valve 124, a second switching valve 125, and a control device 150. The tank 101 corresponds to a heat storage tank configured to store a fluid as a heat medium. The fluid may be water, or a liquid other than water, such as, for example, a calcium chloride aqueous solution, ethylene glycol aqueous solution, or alcohol. In the tank 101, a temperature stratification in which a temperature on an upper side is high and a temperature on a lower side is low is formed due to a difference in density of the fluid due to a difference in temperature. The tank 101 is covered with a thermal insulator not illustrated.

The tank 101 is not limited to the tank configured by a single tank as illustrated, but may be a tank including a plurality of tanks connected in series. In the following explanation, a position in a height direction, that is, in an up-down direction in the tank 101 is mentioned, and in the case of the tank 101 including a plurality of tanks connected in series via a pipe, a position in the up-down direction is determined in an entire level from a tank in an uppermost position to a tank in a lowermost position.

The heat source 200 is capable of heating the fluid. The heat source 200 has an inlet 201 and an outlet 202. The fluid entering from the inlet 201 is heated inside of the heat source 200. The heated fluid flows out from the outlet 202. The heat source 200 may include at least one of a heat pump, a boiler and an electric heater, for example.

The pump 122 circulates the fluid. The pump 122 has an intake port and a discharge port. A first passage 121 connects the discharge port of the pump 122 and the inlet 201 of the heat source 200.

An indoor heating device 300 includes a fluid inlet 301 and a fluid outlet 302. The indoor heating device 300 heats a room by dissipating heat of the fluid. The indoor heating device 300 may include at least one of a floor heating panel installed under a floor, a radiator installed on an indoor wall, a panel heater, and a fan convector, for example. A plurality of indoor heating devices 300 may be connected. A connection method in a case of a plurality of indoor heating devices 300 being connected may be any one of series, parallel, and a combination of series and parallel.

A second passage 120 connects the fluid outlet 302 of the indoor heating device 300 and the intake port of the pump 122. The first switching valve 124 has a first port 124a, a second port 124b and a third port 124c. The second switching valve 125 has a fourth port 125a, a fifth port 125b, and a sixth port 125c.

A first branch portion 121a is formed in a midway of the first passage 121. A third passage 127 connects the first branch portion 121a and the first port 124a. A second branch portion 120a is formed in a midway of the second passage 120. A fourth passage 130 connects the second branch portion 120a and the second port 124b. A fifth passage 128 connects a lower portion of the tank 101 and the third port 124c. A sixth passage 123 connects the outlet 202 of the heat source 200 and the fourth port 125a. A seventh passage 131 connects an upper portion of the tank 101 and the fifth port 125b. An eighth passage 134 connects the sixth port 125c and the fluid inlet 301 of the indoor heating device 300.

The control device 150 is electrically connected to each of the heat source 200, the pump 122, the first switching valve 124 and the second switching valve 125, and is configured to control actions of these components. Further, sensors described later are electrically connected to the control device 150.

The first switching valve 124 can be switched to "third-fifth communication" and "fourth-fifth communication". The third-fifth communication is a state where the third passage 127 communicates with the fifth passage 128, and the fourth passage 130 is cut off. The fourth-fifth communication is a state where the fourth passage 130 communicates with the fifth passage 128, and the third passage 127 is cut off.

The second switching valve 125 can be switched to "sixth-seventh communication", "sixth-eighth communication", "seventh-eighth communication" and "sixth-seventh-eighth communication". The sixth-seventh communication is a state where the sixth passage 123 communicates with the seventh passage 131, and the eighth passage 134 is cut off. The sixth-eighth communication is a state where the sixth passage 123 communicates with the eighth passage 134, and the seventh passage 131 is cut off. The seventh-eighth communication is a state where the seventh passage 131 communicates with the eighth passage 134, and the sixth passage 123 is cut off. The sixth-seventh-eighth communication is a state where both the sixth passage 123 and the seventh passage 131 communicate with the eighth passage 134.

The heating system 1 of the present embodiment includes a remote controller 400. The control device 150 and the remote controller 400 are connected to be capable of bidirectional data communication by wire or wirelessly. The remote controller 400 may be installed in a room. The remote controller 400 has a function of receiving operations of a user concerning an operation action command, change of set values, and the others. The remote controller 400 is an example of a user interface. Though not illustrated, on the remote controller 400, a display displaying information on a state or the like of the heating system 1, operation sections such as a switch operated by the user, a speaker, a microphone and the like may be mounted. The heating system 1 may include a plurality of remote controllers 400 installed in different places.

The heating system 1 of the present embodiment further includes a flow rate sensor 126, a supply temperature sensor 132, and a temperature-after-heating sensor 133. The flow rate sensor 126 detects a volumetric flow rate of a fluid passing through the pump 122. Although in the illustrated example, the flow rate sensor 126 is positioned in the first passage 121 between the first branch portion 121a and the pump 122, the flow rate sensor 126 may be positioned in the second passage 120 between the second branch portion 120a and the pump 122, as a modified example.

In the following explanation, a temperature of the fluid supplied to the indoor heating device 300 is called a "supply temperature". The supply temperature sensor 132 positioned in the eighth passage 134 detects the supply temperature.

In the following explanation, a temperature of the fluid flowing out of the heat source 200 is called a "temperature-after-heating". The temperature-after-heating sensor 133 detects the temperature-after-heating. Although in the illustrated example, the temperature-after-heating sensor 133 is positioned at the outlet 202 of the heat source 200, the temperature-after-heating sensor 133 may be positioned in a midway of the sixth passage 123, as a modified example.

The control device 150 can adjust a heating power of the heat source 200. The heating power of the heat source 200 is an amount of heat given to the fluid by the heat source 200 per hour. A unit of the heating power of the heat source 200 is, for example, "watts".

The control device 150 can adjust output and a rotational speed of the pump 122. The control device 150 can adjust the flow rate of a circulating fluid, by adjusting the output or the rotational speed of the pump 122. The pump 122 may include a pulse width modulation control type DC motor that can change the rotation speed by a speed command voltage from the control device 150.

The heating system 1 of the present embodiment can perform a heat source indoor heating operation, a tank indoor heating operation, and a mixed indoor heating operation. Fig. 2 is a diagram illustrating a flow of the fluid at a time of the heat source indoor heating operation of the heating system 1 illustrated in Fig. 1. In each of Fig. 2 and the following drawings, illustration of the control device 150 and the remote controller 400 is omitted.

As illustrated in Fig. 2, at the time of the heat source indoor heating operation, the control device 150 performs control as follows. The first switching valve 124 is switched to the third-fifth communication. The second switching valve 125 is switched to the sixth-eighth communication. The pump 122 and the heat source 200 are operated. The fluid heated in the heat source 200 passes through the sixth passage 123, the second switching valve 125, and the eighth passage 134 to be supplied to the indoor heating device 300. The fluid passing through the indoor heating device 300 passes through the second passage 120, the pump 122 and the first passage 121 to return to the heat source 200.

At the time of the heat source indoor heating operation, the flow rate of the fluid flowing in the heat source 200 and the flow rate of the fluid flowing in the indoor heating device 300 are equal. It is generally known that when the heat pump type of the heat source 200 using a CO₂ refrigerant is used, the larger the difference between the temperature of the fluid entering the heat source 200 and the temperature of the fluid flowing out of the heat source 200, the more efficient the operation becomes. Accordingly, the operation becomes more efficient when a circulation flow rate of the fluid is made relatively lower. From this viewpoint, in the heat source indoor heating operation, the control device 150 desirably performs control so that the circulation flow rate of the fluid becomes a relatively low flow rate (for example, 3 L/min). At the time of the heat source indoor heating operation, it is desirable to use a radiator or the like as the indoor heating device 300, which is desirable to receive supply of the fluid at a relatively high temperature and has little effect of temperature unevenness.

At the time of the heat source indoor heating operation, the control device 150 may adjust at least one of the heating power of the heat source 200 and output of the pump 122 so that a supply temperature detected by the supply temperature sensor 132 becomes equal to a target value. In doing so, the supply temperature can be controlled easily and properly. Note that the target value of the supply temperature may be a value set by a user with the remote controller 400.

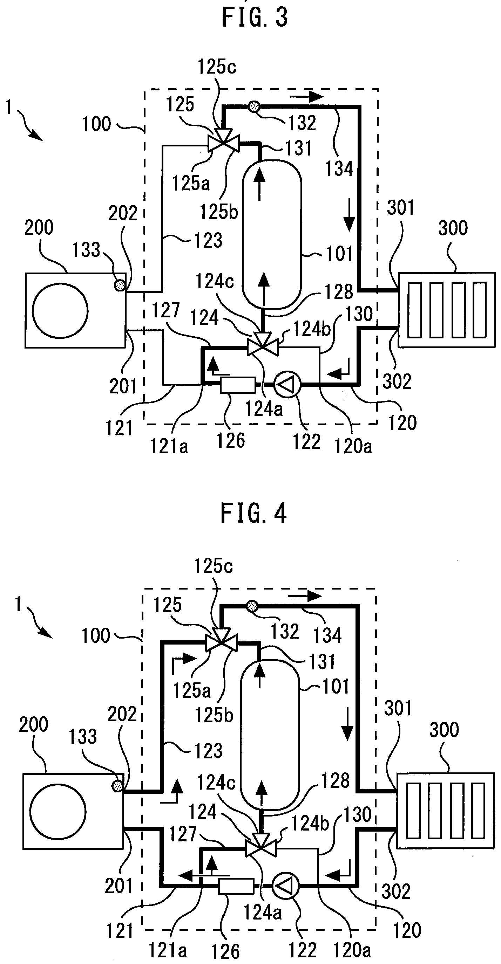

Fig. 3 is a diagram illustrating a flow of the fluid at the time of the tank indoor heating operation of the heating system 1 illustrated in Fig. 1. As illustrated in Fig. 3, at the time of the tank indoor heating operation, the control device 150 performs control as follows. The first switching valve 124 is switched to the third-fifth communication. The second switching valve 125 is switched to the seventh-eighth communication. The pump 122 is operated. The heat source 200 is stopped. The high-temperature fluid flowing out from the upper portion of the tank 101 passes through the seventh passage 131, the second switching valve 125 and the eighth passage 134 to be supplied to the indoor heating device 300. The fluid passing through the indoor heating device 300 passes through the second passage 120, the pump 122, the first passage 121 upstream of the first branch portion 121a, the third passage 127, the first switching valve 124 and the fifth passage 128, and flows into the lower portion of the tank 101.

At the time of the tank indoor heating operation, it is possible to supply the fluid having a relatively high temperature (60°C or more, for example) to the indoor heating device 300 at a relatively high flow rate (10 L/min or more, for example). When starting indoor heating, the control device 150 desirably carries out the tank indoor heating operation. High indoor heating power is required immediately after starting indoor heating, and it is possible to respond to the requirement reliably by carrying out the tank indoor heating operation.

Fig. 4 is a diagram illustrating a flow of the fluid at the time of the mixed indoor heating operation of the heating system 1 illustrated in Fig. 1. As illustrated in Fig. 4, at the time of the mixed indoor heating operation, the control device 150 performs control as follows. The first switching valve 124 is switched to the third-fifth communication. The second switching valve 125 is switched to the sixth-seventh-eighth communication. The pump 122 is operated. The heat source 200 may be operated, or does not have to be operated. The fluid passing through the heat source 200 passes through the sixth passage 123 and flows into the second switching valve 125. The high-temperature fluid flowing out from the upper portion of the tank 101 passes through the seventh passage 131 and flows into the second switching valve 125. A mixture fluid in which the fluid passing through the heat source 200 mixes with the fluid flowing out from the upper portion of the tank 101 in the second switching valve 125 passes through the eighth passage 134 and is supplied to the indoor heating device 300. The fluid flowing out from the indoor heating device 300 passes through the second passage 120 and the pump 122, and thereafter branches into two flows in the first branch portion 121a. One of the flows passes directly through the first passage 121 and returns to the heat source 200. The other flow passes through the third passage 127, the first switching valve 124, and the fifth passage 128, and flows into the lower portion of the tank 101.

At the time of the mixed indoor heating operation, the control device 150 may adjust a mixture ratio by the second switching valve 125 so that the supply temperature detected by the supply temperature sensor 132 becomes equal to a target value. In doing so, the supply temperature can be controlled easily and properly.

In the case of the mixed indoor heating operation, the flow rate of the fluid flowing into the heat source 200 becomes lower than the flow rate of the fluid flowing into the indoor heating device 300. Accordingly, it is possible to make the flow rate of the fluid flowing into the indoor heating device 300 (10 L/min, for example) relatively high while making the flow rate of the fluid flowing into the heat source 200 (5 L/min, for example) relatively low. According to the mixed indoor heating operation like this, when the heat pump type of the heat source 200 using a CO₂ refrigerant is used, highly efficient operation can be performed, and the indoor heating device 300 can be operated at a high flow rate. Accordingly, effect of the temperature unevenness of the indoor heating device 300 hardly occurs, and therefore, the mixed indoor heating operation is suitable for use in floor heating or the like.

When the indoor heating device 300 requires relatively low heating power (1 kW, for example) in the mixed indoor heating operation, the control device 150 may carry out the mixed indoor heating operation without operating the heat source 200. In doing so, the indoor heating operation can be performed with relatively low heating power at a high flow rate.

When the indoor heating device 300 requires relatively high heating power in the mixed indoor heating operation, the control device 150 may carry out the mixed indoor heating operation with an operation of the heat source 200. Further, when the indoor heating device 300 requires high heating power (10 kW, for example) directly after start of indoor heating or the like, the control device 150 may adjust a mixture ratio by the second switching valve 125 so that a mixture ratio of the high-temperature fluid that flows out from the tank 101 through the seventh passage 131 becomes high.

Though not illustrated, the heating system 1 includes a temperature sensor that detects a temperature of the fluid stored in the tank 101. When the temperature of the fluid stored in the tank 101 is higher than a target value of the supply temperature, the control device 150 prohibits the tank indoor heating operation, and desirably carries out the heat source indoor heating operation or the mixed indoor heating operation. In doing so, it is possible to prevent the fluid having a higher temperature than the target value of the supply temperature from flowing into the indoor heating device 300 more reliably.

In each of the indoor heating operations that supply the fluid to the indoor heating device 300, the control device 150 may adjust the output of the pump 122 so that the flow rate of the fluid detected by the flow rate sensor 126 becomes equal to the target value. In doing so, even when pressure loss of the indoor heating pipe changes due to long-term use, it becomes possible to continue to supply the same indoor heating power.

Alternatively, the control device 150 may adjust the output of the pump 122 so that the rotational speed of the pump 122 becomes equal to the target value in each of the indoor heating operations. In doing so, when the indoor heating device 300 is divided into a plurality of systems, and the number of systems that are used changes, the indoor heating power to each of the systems can be kept constant. For example, the control device 150 may perform control so that the rotational speed of the pump 122 at the time of the indoor heating device 300 being used in the one system becomes lower than the rotational speed of the pump 122 at the time of the indoor heating device 300 being used in the two systems.

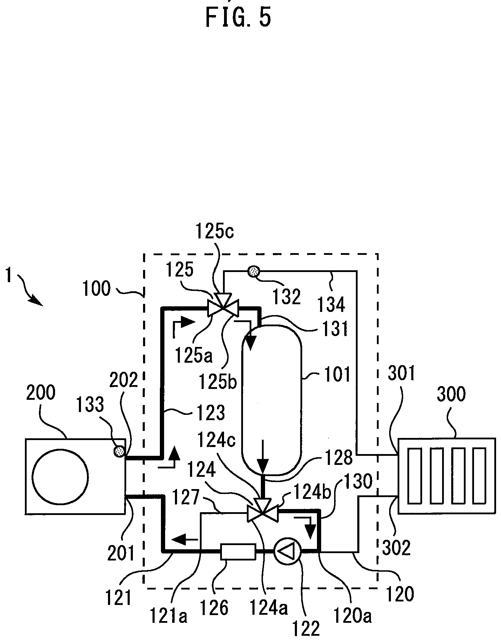

The heating system 1 of the present embodiment can carry out the heat accumulating operation that flows the fluid heated by the heat source 200 into the tank 101. Fig. 5 is a diagram illustrating a flow of the fluid at the time of the heat accumulating operation of the heating system 1 illustrated in Fig. 1. As illustrated in Fig. 5, at the time of the heat accumulating operation, the control device 150 performs control as follows. The first switching valve 124 is switched to the fourth-fifth communication. The second switching valve 125 is switched to the sixth-seventh communication. A low-temperature fluid flowing out from the lower portion of the tank 101 passes through the fifth passage 128, the first switching valve 124, the fourth passage 130, the second passage 120 downstream of the second branch portion 120a, the pump 122 and the first passage 121, and is fed to the heat source 200. The high-temperature fluid heated in the heat source 200 passes through the sixth passage 123, the second switching valve 125 and the seventh passage 131 and flows into the upper portion of the tank 101. By the heat accumulating operation like this, the high-temperature fluid is gradually stored from the top to the bottom inside of the tank 101, and an amount of stored heat in the tank 101 increases.

In the heat accumulating operation, the control device 150 adjusts at least one of the heating power of the heat source 200 and the output of the pump 122 so that the temperature-after-heating which is detected by the temperature-after-heating sensor 133 becomes equal to a target temperature of the fluid stored in the tank 101. Accordingly, the temperature of the fluid stored in the tank 101 can be controlled easily and properly.

By the user operating the remote controller 400, the user may be able to select from the heat accumulating operation, the heat source indoor heating operation, the tank indoor heating operation and the mixed indoor heating operation. In doing so, good usability is obtained.

As described above, the heat source indoor heating operation is an indoor heating operation using the heating power of the heat source 200, the tank indoor heating operation is an indoor heating operation using the heat stored in the tank 101, and the mixed indoor heating operation is an indoor heating operation that can use both the heating power of the heat source 200 and the heat stored in the tank 101. According to the present embodiment, the three kinds of indoor heating operations described above can be carried out with the simple device configuration with the small number of switching valves and the small number of pumps. Consequently, according to the present embodiment, it is advantageous in providing the lightweight heating system 1 with low power consumption at low cost.

Each of the functions of the control device 150 may be achieved by a processing circuit. The processing circuit of the control device 150 may include at least one processor 151 and at least one memory 152. When the processing circuit includes at least one processor 151 and at least one memory 152, each of the functions of the control device 150 may be achieved by software, firmware, or a combination of software and firmware. At least one of software and firmware may be described as a program. At least one of software and firmware may be stored in at least one memory 152. At least one processor 151 may achieve each of the functions of the control device 150 by reading and executing a program stored in at least one memory 152. At least one memory 152 may include a nonvolatile or volatile semiconductor memory, a magnetic disk or the like.

A configuration in which the action of the heating system 1 is controlled by a single control device may not be adopted, but a configuration in which the action of the heating system 1 is controlled by a plurality of control devices cooperating with one another may be adopted.

### Reference Signs List

- 1: heating system
- 100: heat source
- 101: tank
- 120: second passage
- 120a: second branch portion
- 121: first passage
- 121a: first branch portion
- 122: pump
- 123: sixth passage
- 124: first switching valve
- 124a: first port
- 124b: second port
- 124c: third port
- 125: second switching valve
- 125a: fourth port
- 125b: fifth port
- 125c: sixth port
- 126: flow rate sensor
- 127: third passage
- 128: fifth passage
- 130: fourth passage
- 131: seventh passage
- 132: supply temperature sensor
- 133: temperature-after-heating sensor
- 134: eighth passage
- 150: control device
- 200: heat source
- 201: inlet
- 202: outlet
- 300: indoor heating device
- 301: fluid inlet
- 302: fluid outlet
- 400: remote controller

## Claims

1. A heating system comprising:
a tank configured to store a fluid;
a heat source having an inlet and an outlet, the heat source being configured to heat the fluid;
a pump having an intake port and a discharge port, the pump being configured to circulate the fluid;
a first passage connecting the discharge port of the pump and the inlet of the heat source;
a second passage connecting a fluid outlet of an indoor heating device and the intake port of the pump;
a first switching valve having a first port, a second port and a third port;
a second switching valve having a fourth port, a fifth port and a sixth port;
a third passage connecting a first branch portion formed in a midway of the first passage and the first port;
a fourth passage connecting a second branch portion formed in a midway of the second passage and the second port;
a fifth passage connecting a lower portion of the tank and the third port;
a sixth passage connecting the outlet of the heat source and the fourth port;
a seventh passage connecting an upper portion of the tank and the fifth port;
an eighth passage connecting the sixth port and a fluid inlet of the indoor heating device; and
control means for controlling actions of the heat source, the pump, the first switching valve, and the second switching valve,
wherein the first switching valve is configured to be switchable between third-fifth communication that is a state where the third passage communicates with the fifth passage, and fourth-fifth communication that is a state where the fourth passage communicates with the fifth passage, and
the second switching valve is configured to be switchable between sixth-seventh communication that is a state where the sixth passage communicates with the seventh passage, sixth-eighth communication that is a state where the sixth passage communicates with the eighth passage, seventh-eighth communication that is a state where the seventh passage communicates with the eighth passage, and sixth-seventh-eighth communication that is a state where both the sixth passage and the seventh passage communicate with the eighth passage.

2. The heating system according to claim 1,
wherein the heating system is configured to be capable of performing a heat source indoor heating operation, a tank indoor heating operation, and a mixed indoor heating operation,
in the heat source indoor heating operation, the second switching valve is switched to the sixth-eighth communication, and thereby the fluid passing through the heat source is supplied to the indoor heating device,
in the tank indoor heating operation, the first switching valve is switched to the third-fifth communication and the second switching valve is switched to the seventh-eighth communication, whereby the fluid flowing out from the upper portion of the tank is supplied to the indoor heating device, and
in the mixed indoor heating operation, the first switching valve is switched to the third-fifth communication and the second switching valve is switched to the sixth-seventh-eighth communication, whereby a mixed fluid of the fluid passing through the heat source and the fluid flowing out from the upper portion of the tank is supplied to the indoor heating device.

3. The heating system according to claim 2, further comprising a supply temperature sensor configured to detect a supply temperature that is a temperature of the fluid to be supplied to the indoor heating device,
wherein the control means is configured to adjust, in the heat source indoor heating operation, at least one of heating power of the heat source and output of the pump so that the supply temperature becomes equal to a target value, and
the control means is configured to adjust, in the mixed indoor heating operation, a mixture ratio by the second switching valve so that the supply temperature becomes equal to a target value.

4. The heating system according to claim 2 or claim 3,
wherein the control means is configured to prohibit the tank indoor heating operation when a temperature of the fluid stored in the tank is higher than a target value of a temperature of the fluid to be supplied to the indoor heating device.

5. The heating system according to any one of claim 2 to claim 4, wherein the control means is configured to execute the tank indoor heating operation when starting indoor heating.

6. The heating system according to any one of claim 2 to claim 5, further comprising a user interface configured to enable a user to select from a heat accumulating operation for allowing the fluid heated by the heat source to flow into the tank, the heat source indoor heating operation, the tank indoor heating operation, and the mixed indoor heating operation.

7. The heating system according to any one of claim 1 to claim 6, further comprising a flow rate sensor configured to detect a flow rate of the fluid passing through the pump,
wherein the control means is configured to adjust output of the pump so that the flow rate of the fluid becomes equal to a target value when supplying the fluid to the indoor heating device.

8. The heating system according to any one of claim 1 to claim 6, wherein the control means is configured to adjust output of the pump so that a rotational speed of the pump becomes equal to a target value when supplying the fluid to the indoor heating device.

9. The heating system according to any one of claim 1 to claim 8, further comprising a temperature-after-heating sensor detecting a temperature-after-heating that is a temperature of the fluid flowing out from the heat source,
wherein in a heat accumulating operation for allowing the fluid heated by the heat source to flow into the tank, the first switching valve is switched to the fourth-fifth communication, and the second switching valve is switched to the sixth-seventh communication, and
the control means is configured to adjust at least one of heating power of the heat source and output of the pump so that the temperature-after-heating becomes equal to a target value in the heat accumulating operation.
